# EUROPEAN PATENT SPECIFICATION

(11) **EP 1 634 406 B1**
(45) Date of publication and mention of the grant of the patent: **03.10.2012**
(21) Application number: 04741469.3
(22) Date of filing: 16.04.2004
(51) Int. Cl.: H04L 9/12, H04L 9/18

(54) **PROCESSOR, METHOD, TRANSMITTER AND TERMINAL FOR USE IN COMMUNICATIONS**
PROZESSOR, VERFAHREN, SENDER UND ENDGERÄT ZUR VERWENDUNG BEI DER KOMMUNIKATION
PROCESSEUR, PROCEDE, EMETTEUR ET TERMINAL UTILISES EN COMMUNICATION

(30) Priority: 19.05.2003 GB 0311572
(43) Date of publication of application: 15.03.2006
(73) Proprietor: Motorola Solutions, Inc., Schaumburg IL 60196 (US)
(72) Inventor: CHATER-LEA, David, Basingstoke, Hampshire RG22 4PD (GB)
(74) Representative: Treleven, Colin
(86) International application number: PCT/EP2004/050553
(87) International publication number: WO 2004/102873

(56) References cited:
- US-A- 5 161 189
- US-A- 5 361 302
- US-A1- 2002 044 651
- US-A1- 2002 176 578
- "Terrestrial Trunked Radio (TETRA); Security; Synchronization mechanism for end-to-end encryption; ETSI ES 202 109" ETSI STANDARDS, EUROPEAN TELECOMMUNICATIONS STANDARDS INSTITUTE, SOPHIA-ANTIPO, FR, vol. TETRA-6, no. V111, January 2003 (2003-01), XP014004554 ISSN: 0000-0001 cited in the application
- MENEZES A; OORSCHOT VAN P; VANSTONE S: "Chapter 7: Block Ciphers", 1 October 1996 (1996-10-01), HANDBOOK OF APPLIED CRYPTOGRAPHY; [CRC PRESS SERIES ON DISCRETE MATHEMATICES AND ITS APPLICATIONS], CRC PRESS, BOCA RATON, FL, US, PAGE(S) 223 - 282, XP001525007, * page 232, line 1 - page 233, line 20; figure 7.1.d) *

## Description

### FIELD OF THE INVENTION

The present invention relates to a processor, method, transmitter and terminal for use in communications, particularly for sending encrypted information from a first location to a second location, e.g. by wireless.

### BACKGROUND OF THE INVENTION

Many communication systems employ a procedure to encrypt sensitive communicated information especially where the information is sent via insecure channels, e.g. by wireless over the air or via the internet.

For example, in TETRA mobile communication systems, which operate in accordance with TETRA (TErrestrial Trunked Radio) standards or operating protocols which have been defined by the European Telecommunications Standards Institute (ETSI), calls can be end-to-end encrypted. This means that the encryption can only be applied by the sender (source) of the information and removed by the recipient (destination) of the information. This is achieved by producing a random or pseudorandom sequence of numbers (binary digits) and using an encryption algorithm to combine the sequence with a secret user key applied by the user. The combination generates another sequence incorporating the user key which is known as a keystream. The keystream, or a portion of it, is then used to encrypt the user speech, data or other information to be transmitted in encrypted form. This is done by using a process such as by use of an XOR (exclusive OR) function to combine the unencrypted information, such as digital speech information, with the keystream.

In the TETRA operating protocol, transmissions to and from mobile terminals are controlled in a synchronized time slot mode. The slot duration for a traffic (voice, data etc) channel is 14.167ms. Four slots represent four physical channels in a TDMA (time division multiple access) protocol and form one time frame of duration 56.67ms in an 18 time frame multiframe timing structure. TETRA terminals generate speech information in speech frames using an ACELP. One speech frame is transmitted in half of a traffic time slot (known as a 'half slot' or 'sub-slot') at the air interface and therefore two speech frames are transmitted in one timeslot.

The TETRA standard and the transmission protocol is detailed in the EN300392 series of documents published by ETSI. Application and synchronisation of encryption processes is detailed in ETSI document ES202109.

The encryption process has to be synchronised between the transmitter in the sending terminal and the receiver in the receiving terminal. The transmitter must send information concerning the state of the encryption algorithm to the receiver to allow the receiver to synchronise its algorithm for decryption. This synchronisation process is described in the ETSI document ES202109. A synchronisation frame or message is sent in a half slot in place of a frame of encrypted speech information. This is known in the art as 'frame stealing'.

This synchronisation process can be processor intensive to achieve, as it can require a cryptographic checksum to be generated for the synchronisation frame. If the same algorithm is used to generate the cryptographic checksum as is used for the speech encryption process, it can require a change of algorithm mode and/or a change of input parameters. Even if the algorithm is different, it can still be required to operate on the same processor as the encryption process. Either switching modes and reinitialising or changing algorithms can be processor intensive.

The encryption processor may be forced to generate synchronisation information every time it produces an output used to encrypt speech frames, as the decision process whether to transmit the synchronisation or not may rest with a process outside the encryption device, for example to mitigate any negative effects on speech quality.

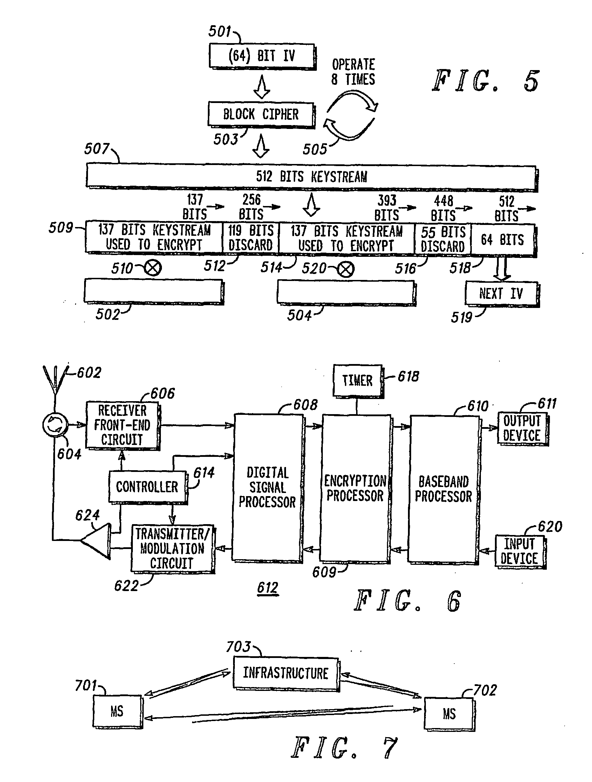

The encryption process standardised in ES202109 and by other documents (e.g. "Handbook of applied Cryptography", by A. Menezes, P. van Oorschot and S. Vanstone, CRC Press, 1996, chapter 7.2.2, and figure 7.1.: OFB mode), encrypts every speech frame independently. Therefore synchronisation is available for each half slot separately. This process is referred to herein as 'single frame encryption'. The process allows the transmitter to replace either the first half slot of encrypted speech with a synchronisation message, or the first and second half slots together; and in the latter case, the synchronisation is different in the first and second half slot. The synchronisation information sent in the first half slot of a timeslot provides the state of the algorithm exactly at the start of the second half slot. The synchronisation information sent in a second half slot provides the state of the encryption algorithm at exactly the start of the first half slot of the following timeslot.

However, recent proposals have been made to conduct at least some of the encryption process using smaller, lower power devices, such as smartcards. The processing overhead of generating a keystream to encrypt each half slot independently, and generating a synchronisation message every half slot can be too great for such devices, especially where a cryptographic checksum is used. In consequence, it has been proposed that these devices use a modified process in which they encrypt over a full timeslot, that is encrypt two frames of speech information together, and only generate one synchronisation message for each timeslot. This alternative process is referred to herein as 'double frame encryption'. For double frame encryption, the synchronisation information provides the state of the algorithm at exactly the start of the following full timeslot, whether the synchronisation message is transmitted in the first or the second half slot of a timeslot.

Examples of multiple frame encryption can be found in the following documents: US5361302 and US5161189.

It can be seen that the single frame encryption and double frame encryption processes are therefore incompatible with regard to handling of second half slot synchronisation. Further incompatability arises as a result of the way in which the encryption algorithm operates in the two processes as illustrated further later.

### SUMMARY OF THE PRESENT INVENTION

According to the present invention in a first aspect there is provided a processor according to claim 1 of the accompanying claims.

The divider may be operable to produce 2ⁿ encryption portions per block, where n is an integer equal to 1 or more.

The divider may be operable to produce per block a first sub-block including an encryption portion followed by a discard portion followed by a second sub-block equal in size to the first sub-block and including an encryption portion followed by a discard portion. Each encryption portion is for encryption of information. Each discard portion is a portion of the block that is not needed in any further operation and can therefore be discarded.

The second sub-block may be followed by the synchronisation portion. The synchronisation portion is for providing a link between keystream blocks and optionally also to synchronise operation of a processor (e.g. in a receiver) operating a corresponding decryption process to decrypt a communication of information encrypted using the encryption portion.

The processor may produce keystream blocks each having a length of 512 bits. The encryption portions may each have a length of 137 bits, e.g. as required to encrypt a frame of information in a TETRA procedure. The synchronisation portions may each have a length of 64 bits.

The keystream generator may include a random number generator operable to produce a random number, often referred to in the art as an 'Initial Vector or IV' and a combiner operable to combine the random number with a secret key to generate an initial keystream block. The secret key may be a special number or code available only to a particular user. It may be produced by any of the methods known in the art, e.g. by a key issue authority. The combiner may operate by any of the key combining methods known in the art. It may for example comprise an exclusive OR combiner.

The divider and the keystream generator of the processor may be operably coupled so that the synchronisation portion in each keystream block is combined with a secret key to produce the next keystream block. In this way, the synchronisation portion which is an encrypted random number which is itself a random number acts as a link between blocks of the keystream. One keystream block may be produced in each timeslot of a communications timing sequence in which encrypted information is to be communicated. The synchronisation portion thereby acts as a synchronisation between keystream blocks in the various blocks

In the processor according to the first aspect, the random number generator may produce an initial vector block and the keystream generator may perform multiple combinations of the initial vector block and the secret key to produce the keystream block. The initial vector block may for example have a length of 64 bits and the keystream generator may for example perform eight cycles of combining the vector block with the secret key to provide a keystream block having a length of 512 bits.

According to the present invention in a second aspect there is provided a an encryption processor including a processor according to the first aspect and a combiner for combining information to be encrypted with the encyption portions produced from the keystream by the divider. The combiner may operate by any of the methods known in the art, e.g. by an exclusive OR function.

The encryption processor may beneficially be operable so that two frames of the information to be encrypted are respectively combined with encryption portions once per time slot of a communications timing sequence in which the information when encrypted is to be communicated. For example two frames may be encrypted in this way every slot of a TETRA TDMA timing sequence; each such frame is encrypted in a sub-slot (half slot) and two encrypted frames may communicated together. Each pair of such encrypted frames may be accompanied in the same time slot be its own synchronisation portion (used also for linking between blocks of the keystream as referred to earlier.

The information to be encrypted may comprise one or more of speech information, text and/or numeric data, picture information and video information.

According to the invention in a third aspect there is provided a communications transmitter including an encryption processor according to the second aspect.

According to the present invention in a fourth aspect theer is provided a telecommunications terminal including the transmitter according to the third aspect.

In one form the processor according to the first aspect is detachable from the terminal. For example, the processor may be carried on a user smartcard which has to be attached to the terminal in order to make the terminal operable in an encypted communications mode. Communication to and/or from the terminal may be wireless although the invention is also useful in connection with other forms of telecommunication, e.g by a landline or wired network or via the internet. The terminal may thus be a fixed or mobile wireless communications terminal, e.g. one which operates according to TETRA standard protocols.

According to the present invention in a fifth aspect there is provided a method for producing an encryption keystream to encrypt information to be communicated from a first location to a second location, the method comprising generating a keystream; and dividing the keystream into blocks including encryption portions and synchronisation portions; wherein each of the blocks is sub-divided into a plurality of equally sized sub-blocks and comprises a plurality of separate encryption portions each in a respective one of the sub-blocks and a single synchronisation portion in one of the sub-blocks. The method may use the processor according to the first aspect.

According to the present invention in a sixth aspect, a method of communicating information from a first location to a second location, e.g. from a first fixed or mobile wireless terminal to a second remote fixed or mobile wireless terminal by wireless communication, includes encrypting the information for transmission from the first location, receiving the encrypted information at the second location and decrypting the received information.

This invention is a mode of operation of the encryption algorithm and synchronisation transmission that is compatible between the original single frame, half slot based encryption system, and the more recent two frame full timeslot based encryption system.

The advantages of this system are that the algorithm is operated to encrypt two frames at once, but synchronisation is only derived and made available for transmission once in a transmission. Thus a lower power processor used to generate the encryption output keystream can encrypt two frames in a mode compatible with a separate encryption system, and only have the processing load of generating one synchronisation frame for each timeslot.

### BRIEF DESCRIPTION OF THE ACCOMPANYING DRAWINGS

Figures 1 to 3 are block schematic diagrams illustrating operation of prior art encryption processors.
Figure 4 is a block schematic diagram of an encryption processor embodying the invention.
Figure 5 is a block schematic diagram illustrating operation of the encryption processor of Figure 4.
Figure 6 is a block schematic diagram of a subscriber unit which is a mobile station adapted to operate using an embodiment of the present invention.
Figure 7 is a diagram illustrating communication between mobile stations.

### DETAILED DESCRIPTION OF EMBODIMENTS OF THE INVENTION

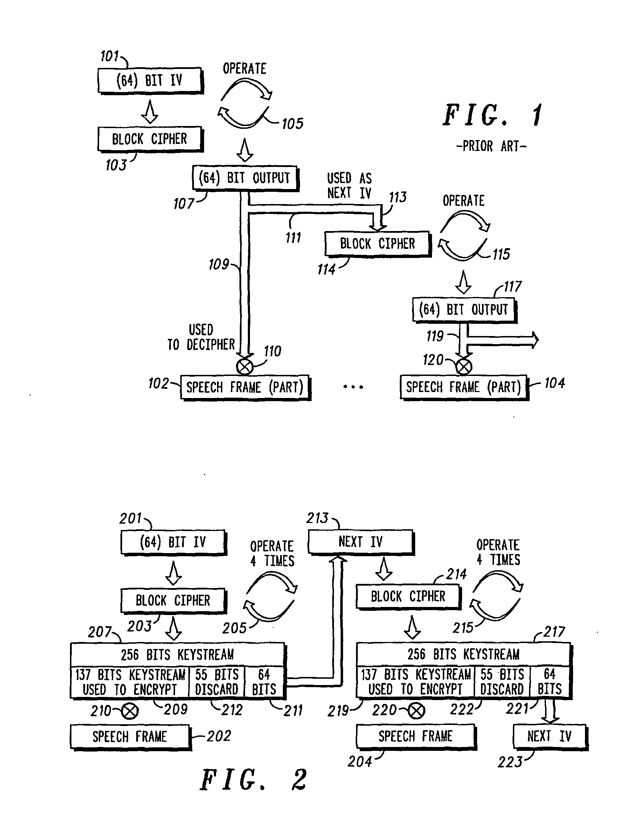

In order that the invention may be better appreciated, the encryption process employed in the known encryption procedures will first be described with reference to FIGs. 1 to 3. Potential incompatibility of the single frame encryption and double frame encryption processes described earlier arises in the generation and application of encryption keystream in the half slots. This is explained as follows.

Algorithms for generating a keystream for encryption are often used in a block cipher based output feedback mode. This is illustrated in FIG. 1 operating on frame parts 102, 104 of a speech frame in a known manner. An IV (random 'initial vector') typically a random binary digital number is generated at step 101 having a length equal to a block length to be processed in a block cipher 103. The block length is typically 64 bits as in the well known commercially available algorithms such as 'International Data Encryption Algorithm' ('IDEA') as supplied by Ascom. Other block lengths can however be used. The IV is encrypted in the block cipher step 103 in a keystream generator using a relevant secret user key as another input. The keystream generation algorithm operates in step 105 to produce at a 64 bit output forming a keystream block indicated by 107. A first portion of the keystream block 107 is employed as an encryption portion 109 in a combining step 110 to encrypt part 102 of the speech frame comprising clear user information. This is carried out by a known XOR combination procedure. A second portion 111 of the keystream block 107 is employed as a synchronisation portion to form the next IV input as shown at 113 to the keystream generator as shown at 113 to form a block cipher 114. Using this input, the keystream generator runs the algorithm again, as shown by step 115, to produce the next keystream block shown at 117, a portion 119 of which is used to encrypt at step 120 the part speech frame 104, and so on.

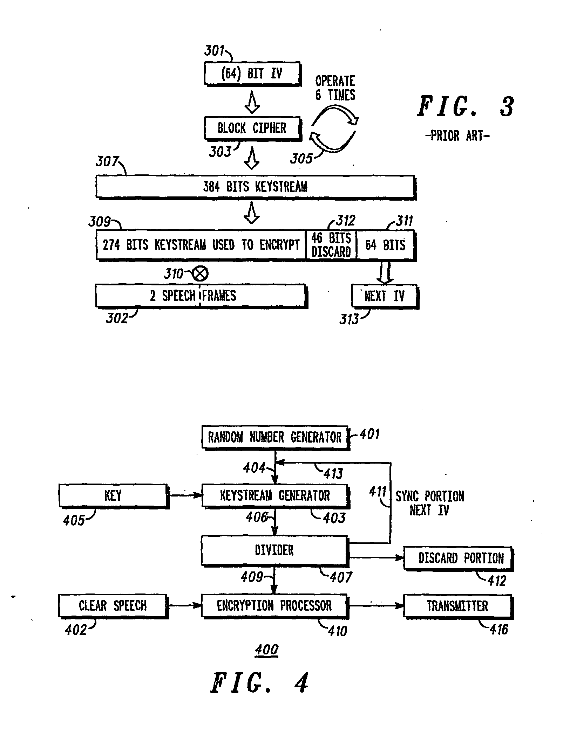

For a practical encryption process using the single frame encryption procedure referred to earlier, the process of operating the algorithm to produce a keystream block is typically repeated for enough cycles to encrypt a single speech frame, and then one further time to provide a synchronisation portion which can be used as an IV to start the process to encrypt the following speech frame. This IV can also be transmitted as a synchronisation message to a receiver without compromising security, as it is not used to encrypt further information itself, and the next and previous outputs of the algorithm cannot be derived without knowledge of the secret key. For the double frame encryption procedure referred to earlier, the algorithm is typically operated for enough cycles to encrypt two speech frames joined together, and then for one further time to generate an IV that can be used for the next timeslot of two speech frames. These practical procedures are illustrated as follows with reference to FIGs. 2 and 3.

Keystream generation, encryption and synchronisation using the single frame encryption procedure referred to earlier to encrypt separate complete frames 202, 204 of speech information is illustrated in FIG.2. This example employs the frame sizes in the TETRA standard as an example, namely 137 bits of information for a speech frame, and a typical 64 bit block size algorithm as in FIG.1. In FIG.2 an IV (random 'initial vector') is generated at step 201 having a length equal to a block length to be processed in a block cipher 203. The block length is 64 bits. The IV is encrypted in a block cipher 203 in a keystream generator using a relevant secret user key as another input. The keystream generation algorithm operates a number of times. In this case four times, as indicated in step 205, to produce a 256 bits output forming a keystream block indicated by 207. A first portion of the keystream block output 207 of length 137 bits is employed as an encryption portion 209 in a step 210 to encrypt the 137 bit speech frame 202 comprising clear user information. This is again carried out by a known XOR combination procedure. A second portion 211 of length 64 bits of the keystream block output 207 is employed as a synchronisation portion to form the next IV input to the keystream generator, as shown at 213. A third portion 212 having a length of 55 bits (the total length 256 bits less the lengths 137 bits and 64 bits of the portions 209 and 211) is a discard portion which is not further used. Using the synchronisation portion 211 as a further IV input as shown at 213, into the 64 bit block cipher as shown at 214, the keystream generator runs the algorithm again four times, as shown by step 215, to produce the next 256 bit keystream block output shown as 217. A first portion of the keystream block 217 of length 137 bits is employed as an encryption portion 219 in a combining step 220 to encrypt the second 137 bit speech frame 204 comprising clear user information. A second (last) portion 221 of the keystream block output 217 is employed as a synchronisation portion to form the next IV input to the keystream generator, as shown at 223, and an intermediate portion 222 of the output 217 having a length of 51 bits is a discard portion, and so on.

FIG. 3 illustrates operation of the known double frame encryption process referred to earlier. This example again employs the frame sizes in the TETRA standard as an example, namely 137 bits of information for a speech frame, and a typical 64 bit block size algorithm as in FIG.1. This example operates generally in the same manner as the example illustrated in FIG. 2. However, in this case, two speech frames in a single timeslot, total length 274 bits (twice 137 bits), are encrypted together as shown by 302. In FIG.3 an IV (random 'initial vector') is generated at step 301 having a length equal to a block length to be processed in a block cipher 303. The block length is 64 bits. The IV is encrypted in the block cipher 303 in a keystream generator using a relevant secret user key as another input. The keystream generation algorithm operates a number of times, in this case six times, in step 305 to produce a 384 (6 x 64) bit output forming a keystream block indicated by 307. A first portion of the keystream block 307 of length 274 bits (2 x 137 bits) is employed as an encryption portion 309 in a combining step 310 to encrypt the 274 bit dual speech frame 302 comprising clear user information. This is again carried out by a known XOR combination procedure. A second (last) portion 311 of the keystream block output 307 is employed as a synchronisation portion to form the next IV input to the keystream generator, as shown at 313. A third (intermediate) portion 312 having a length of 46 bits (the total length 384 bits less the lengths 274 bits and 64 bits of the portions 209 and 311) is a discard portion 312 which is not further used. The process is repeated to encrypt further dual frames of speech information.

It can be seen that the known single frame and double frame encryption procedures shown in FIGs 2 and 3 are incompatible. Even if the algorithms in each procedure start in the same state with the same IV at the first frame of the timeslot, the second timeslot will be encrypted differently in the two examples; i.e. the algorithm output used as keystream to encrypt the second frame will be from a different point in the total numbers of algorithm operation cycles.

Furthermore, in a typical implementation, the algorithm will 'freewheel' across many timeslots before synchronisation message is resent to the receiver. This reduces the processing overhead of sending the synchronisation message, reduces computational power in encoding and checking the synchronisation, and reduces any speech quality degradation which could be caused if synchronisation message transmission replaces speech transmissions. It can be seen that subsequent timeslots would be incompatible between the two examples (single and double frame encryption) if this freewheeling procedure is used, as the single frame encryption procedure in the TETRA case advanced the algorithm for eight cycles each timeslot, whereas the double frame recent dual frame full timeslot encryption system advances the algorithm for six cycles each timeslot. This incompatibility problem is solved by the invention.

FIG 4 is a block schematic diagram of an encryption processor 400 useful in encrypting information in accordance with an embodiment of the invention. A random number generator 401 produces an output consisting of an IV 404 which is applied as initial input to a keystream generator 403. A secret key 405 possessed by a user is applied as an input to the keystream generator 403. An algorithm is run in the generator 403 to combine the key 405 and IV 404 in multiple cycles to produce as an output a keystream block 406 which is operated on by a divider 407 to divide the keystream block output 406 into three portions, namely an encryption portion 409, a synchronisation portion 411 which is applied back into the keystream generator to provide the next IV for the keystream generator 403, and a discard portion 412, which is not further used. Detailed operation of the processor 400 in accordance with an embodiment of the invention is described with reference to FIG. 5 as follows.

The procedure embodying the invention shown in FIG 5 again employs the frame sizes in the TETRA standard as an example, namely 137 bits of information for a speech frame, and a typical 64 bit block size algorithm. This example operates generally in the same manner as the example illustrated in FIG. 3. However, in this case, two speech frames in a single timeslot as shown by 502, 504, each frame of length 137 bits, are encrypted separately. In FIG.5, an IV (random 'initial vector') (produced as indicated earlier by the random number generator 401 of FIG. 4) is generated at step 501 having a length equal to a block length to be processed in a block cipher (as in the keystream generator 403 shown in FIG. 4). The block length is 64 bits. The IV is encrypted in the block cipher 503 using the relevant secret user key (as key 405, FIG.4) as another input. The keystream generation algorithm run in the generator 403 operates a number of times, in this case eight times, in step 505 to produce a 512 (8 x 64) bit output forming a keystream block indicated by 507 (equivalent to output 406 in FIG.4). A first portion (as divided by the divider 407 of FIG. 4) of the keystream block 507 of length 137 bits is employed as an encryption portion 509 in a combining step 510 (in the encryption processor 410 of FIG. 4) to encrypt the 137 bit single speech frame 502 comprising clear user information. This is again carried out by a known XOR combination procedure. A second portion 512 (as divided by the divider 407 of FIG. 4) having a length of 119 bits (the total length of half of the keystream block 507 less the length 137 bits of the portion 509) is a discard portion 512 which is not further used. A third portion (as divided by the divider 407 of FIG. 4) of the keystream block 507 of length 137 bits is employed as a further encryption portion 514 in a further combining step 520 (in the encryption processor 410 of FIG. 4) to encrypt the second 137 bit single speech frame 504 comprising clear user information. This is again carried out by a known XOR combination procedure. A fourth portion 516 (as divided by the divider 407 of FIG. 4) has a length of 55 bits, i.e. the total length (256 bits) of half of the keystream block 507 less the length 137 bits of the portion 514 plus the length, 64 bits, of a fifth portion 518. The fourth portion, between the portions 514 and 518, is a discard portion 512 which is not further used. Finally for the timeslot, the fifth portion 518 at the end of the divided keystream block 507 is employed as a synchronisation portion to form the next IV input to the block cipher (in the keystream generator 403) as shown at 519. The process using this IV input is repeated to encrypt further pairs of frames of speech information in succeeding timeslots.

The benefit of the invention as illustrated by the embodiment shown in FIG. 5 is to provide compatability with both the single frame encryption procedure illustrated in FIG. 2 and the double frame encryption procedure illustrated in FIG.3. The discarding of 119 bits in the discard portion 512 between the two encryption portions 509 and 514 allows the second speech frame 504 to be encrypted with the next output keystream bits of the keystream block 507 produced by the algorithm in the keystream generator 403 after its first four cycles of operation are complete. It can be seen that the algorithm will have been operated at this point for the same number of cycles as in the single frame encryption example illustrated in FIG. 2. Following the encryption of the second frame 504, a further 55 bits are discarded in the discard portion 516, and the last 64 bits are used as the IV used for synchronisation of the following timeslot. This accounts for the second half of the keystream block 507 which also requires four cycles of the algorithm in the keystream generator 403.

The advantages of the invention are that the algorithm run in keystream generator 403 is operated to encrypt two frames at once, but a synchronisation portion is derived less frequently. It is only derived and made available for transmission once in a timeslot. Thus a lower power processor used to generate the encryption output keystream can encrypt two frames in a mode compatible with a separate encryption system, and need only have the processing load of generating one synchronisation message or frame for each timeslot.

The more general case where more than two speech frames per timeslot are to be encrypted using an algorithm requiring multiple cycles of operation in the keystream generator, and where the procedure is to be compatible with an approach where only one timeslot is encrypted by one or more cycles of the algorithm is as follows:
The algorithm is operated for as many cycles as would have been required for the single frame encryption system. Keystream is allocated to encrypt speech such that the allocated keystream is the same as it would have been in a single frame encryption system. Keystream is discarded between the segments used to encrypt the speech frames. The keystream following the final speech frame is used to generate an Initial Vector to be used for synchronisation purposes, that is the same as would have been generated following the encryption of the final frame in a single frame encryption system.

Referring now to FIG. 6, a block diagram of a subscriber unit which is a mobile station (MS) 612 adapted to operate using an embodiment of the present invention is shown. The MS 612 may be suitable for operating in a trunked or direct mode as required. The MS 612 includes an antenna 602 preferably coupled to a duplex filter or circulator 604 that provides isolation between receive and transmit chains within MS 612. The receiver chain includes a receiver front-end circuit 606 (effectively providing reception, filtering and intermediate or base-band frequency conversion). The front-end circuit 606 receives signal communications from another terminal, such as another MS, in its secure talk group. The front-end circuit 606 is serially coupled to a signal processor (generally realised by a digital signal processor, DSP) 608. The signal processor 608 performs signal demodulation, error correction and formatting, and recovers end-to-end encrypted information from the received signal. A signal representing the information recovered by the signal processor 608 is serially coupled to an encryption processor 609, the operation of which is as described earlier with reference to FIGs 4 and 5.

A timer 618 in FIG. 6 may be operably coupled to the encryption processor 609 to provide replay protection, in a known manner by key modification or other means, to the encryption process in addition to the secret key 405 (referred to in FIG.4) entered by the user.

As known in the art, received signals that have been decrypted by the encryption processor 609 are typically input to a baseband processing device 610, which takes the decrypted information received from the encryption processor 609 and formats it in a suitable manner to send to an output device 611, such as a speaker and/or display, e.g. a visual display unit (VDU).

In an alternative form of the MS shown in FIG.6, the functions of the signal processor 608 and the baseband processing device 610 may be provided within the same physical device. The function of the encryption processor 609 may also be provided within the same physical device as either the signal processor 408 or the baseband processing function 610, or both. Alternatively, as mentioned earlier, part of the encryption processor 609 may be part of a separate device, e.g. smartcard, which is applied into a suitable connection in the MS 612 to provide operation.

A controller 614 controls the information flow and operational state of processors within the MS 612.

The MS 612 will not be able to decrypt a received encrypted transmission if the MS 612 does not possess the secret key used by the sender, and possibly also the transmitter ID, e.g. Layer 2 identifier, of the sending MS, or if the transmission has been corrupted to affect the transmitter ID of the sending MS. In the latter case, the transmission would appear to have been sent from a different user, and therefore the transmission could not be decrypted. The MS 612 will also not be able to decrypt the encrypted transmission if it does not possess the correct combining function algorithm.

As regards the transmit chain of the MS 612, this essentially includes an input device 620, such as a microphone, coupled in series through a baseband processor 610, an encryption processing function 609, the signal processing function 608, transmitter/modulation circuitry 622 and a power amplifier 624. The processor 608, transmitter/modulation circuitry 622 and the power amplifier 624 are operationally responsive to the controller 614, with an output from the power amplifier 624 coupled to the duplex filter or circulator 604, as known in the art.

The transmit chain in the MS 612 takes the baseband signal from input device 620 and converts it into information that can be encrypted by the encryption processor 609. The encryption processor 609 encrypts this in the manner described with reference to FIGs 4 and 5 using a secret key and possibly also a transmitter ID, e.g. Layer-2 MAC identity, which may be provided by the processor 608, or some other storage capable device within the MS 612. The encrypted information is then passed to the signal processor 608 where it is encoded for transmission by transmit/modulation circuitry 622 and power amplifier 624.

The signal processor 608 in the transmit chain may be implemented as distinct from the processor in the receive chain. Alternatively, a single processor 608 may be used to implement processing of both transmit and receive signals, as shown in FIG. 6.

Of course, the various components within the MS 612 can be realised in discrete or integrated component form, with an ultimate structure therefore being a selection from these forms.

Figure 7 is a diagram illustrating communication between mobile stations MSs 701 and 702 by the method claimed in claim 21 of the accompanying claims.

The generic case where more than one speech slot is encrypted by an algorithm requiring multiple cycles of operation, and is to be compatible with an approach where only one slot is encrypted by one or more cycles of the algorithm is as follows:
The algorithm is operated for as many cycles as would have been required for the single frame encryption system. Keystream is allocated to encrypt speech such that the allocated keystream is the same as it would have been in a single frame encryption system. Keystream is discarded between the segments used to encrypt the speech frames. The keystream following the final speech frame is used to generate an Initial Vector to be used for synchronisation purposes, that is the same as would have been generate following the encryption of the final frame in a single frame encryption system.

Speech has been referred to above. However the same invention is also applicable to any form of digital data where the data can be encrypted in single or multiple frames.

### Synchronisation process

A second aspect of the invention applies to the synchronisation process. With the encryption process in this invention, any synchronisation frame received in the second half slot will always be correct for the first frame (the first half slot) of the following timeslot whether related to the single frame encryption system or the multiple frame encryption system.
However, synchronisation sent in the first half of a timeslot will be incompatible between the systems unless an algorithm is applied to correct for the differences. The second aspect of the invention is an algorithm that is applied in each system once they recognise the other system.

The ability of an encryption and synchronisation system to recognise a different system is well known in the art, and can be achieved by sending an identifier that relates to the encryption and synchronisation system as part of the transmitted synchronisation system.

In this invention, each of the two systems applies a different algorithm.

### Single frame encryption system

The single frame encryption system transmits a synchronisation value that contains an IV describing the algorithm state at exactly the start of the next speech frame, i.e. the next half slot.

When a single frame encryption system receiving device receives such a value, having identified the source to be another single frame encryption system transmitting device, it shall synchronise its algorithm used for decryption with the received IV at the start of the next speech frame, irrespective of whether the IV was received in the first or second half slot of the transmission.

When a single frame encryption system receiving device receives an IV, having identified the source to be a multiple frame encryption system transmitting device, it shall synchronise its algorithm used for decryption with the received IV at the start of the next timeslot, irrespective of whether the IV was received in the first or second half slot of the transmission. If the IV was received in the first half slot of a timeslot, the receiving device must discard any encrypted speech contents in the second half slot as it does not know the state of the encryption algorithm at this time. The exception to this is if the receiving device had previously received valid synchronisation, and was able to derive the correct value through its flywheel process.

### Multiple frame encryption system

The multiple frame encryption system transmits a synchronisation value that contains an IV describing the algorithm state at exactly the start of the next full timeslot.

When a multiple frame encryption system receiving device receives such a value, having identified the source to be another multiple frame encryption system transmitting device, it shall synchronise its algorithm used for decryption with the received IV at the start of the next timeslot, irrespective of whether the IV was received in the first or second half slot of the transmission.

When a multiple frame encryption system receiving device receives an IV in the second half slot of a timeslot, having identified the source to be a single frame encryption system transmitting device, it shall synchronise its algorithm used for decryption with the received IV at the start of the next timeslot.

When a multiple frame encryption system receiving device receives an IV in the first half slot of a timeslot, having identified the source to be a single frame encryption system transmitting device, it shall either discard the IV as being incorrect for the start of the next timeslot, or shall synchronise its algorithm used for decryption with the received IV, then advance the algorithm state by the number of timeslots that would have been used to encrypt a speech frame and generate synchronisation for the first half of the timeslot (without applying the output to any decryption process again), and then use the IV output from this process as the synchronisation state at the start of the next timeslot. In the TETRA case, this means that when the dual frame encryption system receiver receives an IV in the first half slot, it must advance the algorithm for four cycles, and then use the resultant IV to synchronise itself for reception at the start of the next timeslot.

## Claims

1. A processor (400) for use in a first communication terminal (612) for producing an encryption keystream to encrypt information to be communicated from the first communication terminal to a second communication terminal, the processor comprising a keystream generator (403) operable to generate a keystream (406); and a divider (407) operable to divide the keystream into blocks (507), each of the blocks including: (i) an encryption portion (509) for use in combining in a first combiner (410) of the first terminal with a respective portion of the information (402) to be communicated to encrypt the respective portion of the information; and (ii) a synchronisation portion (518) for use in the keystream generator (403) to generate a next encryption keystream block by combination with a secret key (405); **characterised in that** the divider (407) is operable to divide each of the keystream blocks (509, 512, 514, 516, 518) into a plurality of equally sized sub-blocks, each of the sub-blocks comprising a respective one of a plurality of separate encryption portions (509, 514) each for use in combining in the first combiner (410, 510) with a information to be communicated a respective portion of the to encrypt the respective portion of the information; and one of the sub-blocks comprising the single synchronisation portion (518).

2. A processor according to claim 1 and wherein the divider is operable to produce 2ⁿ encryption portions per block, where n is an integer equal to 1 or more.

3. A processor according to claim 1 or claim 2 and wherein the divider is operable to produce per block (507) the first sub-block (509, 512) including a first one of the encryption portions (509) followed by a first discard portion (512) followed by the second sub-block (514, 516) equal in size to the first sub-block and including a second one of the encryption portions (514) followed by

4. A processor according to claim 3 and wherein the second sub-block includes an encryption portion followed by a second discard portion followed by the synchronisation portion (518).

5. A processor according to any one of the preceding claims 2 to 4 and wherein the keystream blocks (507) each have a length of 512 bits.

6. A processor according to any one of the preceding claims and wherein the encryption portions (509, 514) each have a length of 137 bits.

7. A processor according to any one of the preceding claims and wherein the synchronisation portion (518) of each block has a length of 64 bits.

8. A processor according to any one of the preceding claims wherein each keystream block (509, 512, 514, 516, 518) is produced in one timeslot of a communications timing sequence in which encrypted information is to be communicated.

9. A processor according to any one of the preceding claims and wherein the keystream generator (403) includes a random number generator (401) operable to produce a random number and a second combiner (403) operable to combine the random number with a secret key to generate an initial keystream block.

10. A processor according to claim 9 and wherein the random number generator is operable to produce an initial vector block (501) and the keystream generator (403) is operable to perform multiple combinations of the initial vector block and the secret key (405) to produce the keystream block (509, 512, 514, 516, 518).

11. A processor according to claim 10 and wherein the initial vector block has a length of 64 bits.

12. An encryption processor (400) including a processor according to any one of the preceding claims and the first combiner (410, 510) for combining the information to be encrypted with the encryption portions (509, 514) produced from the keystream by the divider.

13. An encryption processor according to claim 12 and which is operable so that two frames (502, 504) of the information to be encrypted are respectively combined with encryption portions (509, 514) once per time slot of a communications timing sequence in which the information when encrypted is to be communicated.

14. An encryption processor according to claim 12 or claim 13 and wherein the information to be encrypted comprises one or more of speech information, text and/or numeric data, picture information and video information.

15. A communications transmitter (620, 610, 608, 622)including an encryption processor (609) according to any one of claims 12 to 14.

16. A telecommunications terminal including the transmitter according to claim 15.

17. A telecommunications terminal (612) according to claim 16 wherein the processor of the encryption processor is detachable from the terminal.

18. A telecommunications terminal (612) according to claim 16 or claim 17 and which is a fixed or mobile wireless communications terminal.

19. A telecommunications terminal (612) according to claim 18 and which operates according to TETRA standard protocols.

20. A method for use in a first communication terminal (612) for producing an encryption keystream to encrypt information to be communicated from the first communication terminal to a second communication terminal, the method comprising: a keystream generator (403) generating a keystream; and a divider (407) dividing the keystream into blocks, each of the blocks (507) including: (i) an encryption portion (509) for use in combining in a combiner (410, 510) of the first terminal with a respective portion of the information (402) to be communicated to encrypt the respective portion of the information; and (ii) a synchronisation portion (518) for use in the keystream generator to generate a next encryption keystream block by combination with a secret key; **characterised by**: the divider (407) dividing each of the keystream blocks (507) into sub-blocks comprising a respective one of a plurality of separate a plurality of equally sized encryption portions (509, 514) each for use in combining in the , a combiner with respective portion of the information to be communicated to encrypt the respective portion of the information; and one of the sub-blocks comprising the single synchronisation portion (518).

21. A method of communicating information from a first communication terminal (701) to a second communication terminal (702), the method including encrypting the information by combining the information with the encryption portions of the keystream produced by the method according to claim 20 for transmission from the first terminal, receiving the encrypted information at the second terminal and decrypting the received information at the second terminal.

## Patentansprüche

1. Prozessor (400) zur Verwendung in einem ersten Kommunikationsendgerät (612) zum Erzeugen eines Verschlüsselungs-Keystreams, um Informationen zu verschlüsseln, die von dem ersten Kommunikationsendgerät zu einem zweiten Kommunikationsendgerät kommuniziert werden sollen, wobei der Prozessor umfasst: einen Keystream-Generator (403), der betriebsbereit ist, um einen Keystream (406) zu erzeugen; und einen Dividierer (407), der betriebsbereit ist, um den Keystream in Blöcke (507) zu teilen, wobei jeder der Blöcke umfasst: (i) einen Verschlüsselungsteil (509) zur Verwendung, um in einem ersten Kombinierer (410) des ersten Endgerätes mit einem entsprechenden Teil der Informationen (402) zu kombinieren, die kommuniziert werden, um den entsprechenden Teil der Informationen zu verschlüsseln; und (ii) einen Synchronisierungsteil (518) zur Verwendung in dem Keystream-Generator (403), um einen nächsten Verschlüsselungs-Keystream-Block durch eine Kombination mit einem geheimen Schlüssel (405) zu erzeugen; **dadurch gekennzeichnet, dass** der Dividierer (407) betriebsbereit ist, um jeden der Keystream-Blöcke (509, 512, 514, 516, 518) in eine Mehrzahl von gleichgroßen Teilblöcken zu teilen, wobei jeder der Teilblöcke jeweils eine Mehrzahl von getrennten Verschlüsselungsteilen (509, 514) umfasst, jeder zur Verwendung, um in dem ersten Kombinierer (410, 510) mit einem entsprechenden Teil der Informationen zu kombinieren, die kommuniziert werden, um den entsprechenden Teil der Informationen zu verschlüsseln; und einer der Teilblöcke den einzigen Synchronisationsteil (518) umfasst.

2. Prozessor gemäß Anspruch 1, wobei der Dividierer betriebsbereit ist, um 2ⁿ Verschlüsselungsteile pro Block zu erzeugen, wobei n eine ganze Zahl gleich 1 oder größer ist.

3. Prozessor gemäß Anspruch 1 oder Anspruch 2, wobei der Dividierer betriebsbereit ist, um pro Block (507) den ersten Teilblock (509, 512) zu erzeugen, der einen ersten der Verschlüsselungsteile (509) umfasst, gefolgt von einem ersten Ausschussteil (512), gefolgt von dem zweiten Teilblock (514, 516), der gleichgroß wie der erste Teilblock ist und einen zweiten der Verschlüsselungsteile (514) umfasst, gefolgt von dem Synchronisationsteil (516).

4. Prozessor gemäß Anspruch 3, wobei der zweite Teilblock einen Verschlüsselungsteil umfasst, der von einem zweiten Ausschuss-Teil gefolgt wird, gefolgt von dem Synchronisationsteil (518).

5. Prozessor gemäß einem der vorangehenden Ansprüche 2 bis 4, wobei jeder der Keystream-Blöcke (507) eine Länge von 512 Bits aufweist.

6. Prozessor gemäß einem der vorangehenden Ansprüche, wobei jeder der Verschlüsselungsteile (509, 514) eine Länge von 137 Bits aufweist.

7. Prozessor gemäß einem der vorangehenden Ansprüche, wobei der Synchronisationsteil (518) eines jeden Blockes eine Länge von 64 Bits aufweist.

8. Prozessor gemäß einem der vorangehenden Ansprüche, wobei jeder Keystream-Block (509, 512, 514, 516, 518) in einem Zeitschlitz einer Kommunikationstimingsequenz erzeugt wird, in dem verschlüsselte Informationen kommuniziert werden sollen.

9. Prozessor gemäß einem der vorangehenden Ansprüche, wobei der Keystream-Generator (403) umfasst: einen Zufallszahlengenerator (401), der betriebsbereit ist, um eine Zufallszahl zu erzeugen, und einen zweiten Kombinierer (403), der betriebsbereit ist, um die Zufallszahl mit einem geheimen Schlüssel zu kombinieren, um einen Anfangs-Keystream-Block zu erzeugen.

10. Prozessor gemäß Anspruch 9, wobei der Zufallszahlengenerator betriebsbereit ist, um einen Anfangsvektorblock (501) zu erzeugen, und der Keystream-Generator (403) betriebsbereit ist, um Mehrfachkombinationen des Anfangsvektorblocks und des geheimen Schlüssels (405) durchzuführen, um den Keystream-Block (509, 512, 514, 516, 518) zu erzeugen.

11. Prozessor gemäß Anspruch 10, wobei der Anfangsvektorblock eine Länge von 64 Bits aufweist.

12. Verschlüsselungsprozessor (400), der einen Prozessor gemäß einem der vorangehenden Ansprüche und den ersten Kombinierer (410, 510) zum Kombinieren der Informationen, die mit den Verschlüsselungsteilen (509, 514), die von dem Keystream durch den Dividierer erzeugt werden, verschlüsselt werden sollen, umfasst.

13. Verschlüsselungsprozessor gemäß Anspruch 12, der betriebsbereit ist, so dass zwei Rahmen (502, 504) der Informationen, die verschlüsselt werden sollen, jeweils mit Verschlüsselungsteilen (509, 514) einmal pro Zeitschlitz einer Kommunikationstimingsequenz, in der die Information, wenn sie verschlüsselt ist, kommuniziert werden soll, kombiniert werden.

14. Verschlüsselungsprozessor gemäß Anspruch 12 oder Anspruch 13, wobei die zu verschlüsselnden Informationen umfassen: Sprachinformationen, Text- und/oder numerische Daten, Bildinformationen und/oder Videoinformationen.

15. Kommunikationssender (620, 610, 608, 622), der einen Verschlüsselungsprozessor (609) gemäß einem der Ansprüche 12 bis 14 umfasst.

16. Telekommunikationsendgerät, das den Sender gemäß Anspruch 15 umfasst.

17. Telekommunikationsendgerät (612) gemäß Anspruch 16, wobei der Prozessor des Verschlüsselungsprozessors von dem Endgerät abnehmbar ist.

18. Telekommunikationsendgerät (612) gemäß Anspruch 16 oder Anspruch 17, das ein festes oder drahtloses Kommunikationsendgerät ist.

19. Telekommunikationsendgerät (612) gemäß Anspruch 18, das gemäß TETRA-Standardprotokollen arbeitet.

20. Verfahren zur Verwendung in einem ersten Kommunikationsendgerät (612) zum Erzeugen eines Verschlüsselungs-Keystreams, um Informationen zu verschlüsseln, die von dem ersten Kommunikationsendgerät zu einem zweiten Kommunikationsendgerät kommuniziert werden sollen, wobei das Verfahren umfasst: einen Keystream-Generator (403), der einen Keystream erzeugt; und einen Dividierer (407), der den Keystream in Blöcke teilt, wobei jeder der Blöcke (507) umfasst: (i) einen Verschlüsselungsteil (509) zur Verwendung, um in einem ersten Kombinierer (410, 510) des ersten Endgerätes mit einem entsprechenden Teil der Informationen (402) zu kombinieren, die kommuniziert werden, um den entsprechenden Teil der Informationen zu verschlüsseln; und (ii) einen Synchronisierungsteil (518) zur Verwendung in dem Keystream-Generator um einen nächsten Verschlüsselungs-Keystream-Block durch eine Kombination mit einem geheimen Schlüssel zu erzeugen; **dadurch gekennzeichnet, dass** der Dividierer (407) jeden der Keystream-Blöcke (507) in eine Mehrzahl von gleichgroßen Teilblöcken teilt, wobei jeder der Teilblöcke jeweils eine Mehrzahl von getrennten Verschlüsselungsteilen (509, 514) umfasst, jeder zur Verwendung, um in dem ersten Kombinierer mit einem entsprechenden Teil der Informationen zu kombinieren, die kommuniziert werden, um den entsprechenden Teil der Informationen zu verschlüsseln; und einer der Teilblöcke den einzigen Synchronisationsteil (518) umfasst.

21. Verfahren eines Kommunizierens von Informationen von einem ersten Kommunikationsendgerät (701) zu einem zweiten Kommunikationsendgerät (702), wobei das Verfahren umfasst: Verschlüsseln der Informationen durch Kombinieren der Informationen mit den Verschlüsselungsteilen des Keystreams, die durch das Verfahren gemäß Anspruch 20 zum Übertragen von dem ersten Endgerät erzeugt werden, Empfangen der verschlüsselten Informationen bei dem zweiten Endgerät und Entschlüsseln der empfangenen Informationen bei dem zweiten Endgerät.

## Revendications

1. Processeur (400) pour l'utilisation dans un premier terminal de communication (612) pour produire une séquence de clé de chiffrement afin de chiffrer des informations à communiquer du premier terminal de communication à un second terminal de communication, le processeur comprenant un générateur de séquence de clé (403) exploitable pour générer une séquence de clé (406) ; et un diviseur (407) exploitable pour diviser la séquence de clé en blocs (507), chacun des blocs incluant : (i) une partie de chiffrement (509) pour l'utilisation dans la combinaison dans un premier combineur (410) du premier terminal avec une partie respective des informations (402) à communiquer afin de chiffrer la partie respective des informations ; et (ii) une partie de synchronisation (518) pour l'utilisation dans le générateur de séquence de clé (403) afin de générer un bloc de séquence de clé de chiffrement suivant par la combinaison avec une clé secrète (405) ; **caractérisé en ce que** le diviseur (407) est exploitable pour diviser chacun des blocs de séquence de clé (509, 512, 514, 516, 518) en une pluralité de sous-blocs de taille égale, chacun des sous-blocs comprenant une partie respective d'une pluralité de parties de chiffrement distinctes (509, 514), chacune pour l'utilisation dans la combinaison dans le premier combineur (410, 510) avec une partie respective des informations à communiquer afin de chiffrer la partie respective des informations ; et un des sous-blocs comprenant la seule partie de synchronisation (518).

2. Processeur selon la revendication 1 et dans lequel le diviseur est exploitable pour produire 2ⁿ parties de chiffrement par bloc, où n est un entier égal à 1 ou supérieur.

3. Processeur selon la revendication 1 ou la revendication 2 et dans lequel le diviseur est exploitable pour produire par bloc (507) le premier sous-bloc (509, 512) incluant une première des parties de chiffrement (509) suivie d'une première partie de rejet (512) suivie du second sous-bloc (514, 516) de taille égale au premier sous-bloc et incluant une seconde des parties de chiffrement (514) suivie de la partie de synchronisation (516).

4. Processeur selon la revendication 3 et dans lequel le second sous-bloc inclut une partie de chiffrement suivie d'une seconde partie de rejet suivie de la partie de synchronisation (518).

5. Processeur selon l'une quelconque des revendications 2 à 4 précédentes et dans lequel les blocs de séquence de clé (507) ont chacun une longueur de 512 bits.

6. Processeur selon l'une quelconque des revendications précédentes et dans lequel les parties de chiffrement (509, 514) ont chacune une longueur de 137 bits.

7. Processeur selon l'une quelconque des revendications précédentes et dans lequel la partie de synchronisation (518) de chaque bloc a une longueur de 64 bits.

8. Processeur selon l'une quelconque des revendications précédentes et dans lequel chaque bloc de séquence de clé (509, 512, 514, 516, 518) est produit dans un créneau temporel d'une séquence de cadencement de communications dans laquelle des informations chiffrées doivent être communiquées.

9. Processeur selon l'une quelconque des revendications précédentes et dans lequel le générateur de séquence de clé (403) inclut un générateur de nombres aléatoires (401) exploitable pour produire un nombre aléatoire et un second combineur (403) exploitable pour combiner le nombre aléatoire avec une clé secrète afin de générer un bloc de séquence de clé initial.

10. Processeur selon la revendication 9 et dans lequel le générateur de nombres aléatoires est exploitable pour produire un bloc de vecteur initial (501) et le générateur de séquence de clé (403) est exploitable pour effectuer des combinaisons multiples du bloc de vecteur initial et de la clé secrète (405) afin de produire le bloc de séquence de clé (509, 512, 514, 516, 518).

11. Processeur selon la revendication 10 et dans lequel le bloc de vecteur initial a une longueur de 64 bits.

12. Processeur de chiffrement (400) incluant un processeur selon l'une quelconque des revendications précédentes et le premier combineur (410, 510) pour combiner les informations à chiffrer avec les parties de chiffrement (509, 514) produites à partir de la séquence de clé par le diviseur.

13. Processeur de chiffrement selon la revendication 12 et qui est exploitable de sorte que deux trames (502, 504) des informations à chiffrer soient combinées respectivement avec des parties de chiffrement (509, 514) une fois par créneau temporel d'une séquence de cadencement de communications dans laquelle les informations, lorsqu'elles sont chiffrées, doivent être communiquées.

14. Processeur de chiffrement selon la revendication 12 ou la revendication 13 et dans lequel les informations à chiffrer comprennent une ou plusieurs parmi des informations de parole, des données texte et/ou numériques, des informations d'image et des informations vidéo.

15. Emetteur de communications (620, 610, 608, 622) incluant un processeur de chiffrement (609) selon l'une quelconque des revendications 12 à 14.

16. Terminal de télécommunications incluant l'émetteur selon la revendication 15.

17. Terminal de télécommunications (612) selon la revendication 16, dans lequel le processeur du processeur de chiffrement est détachable du terminal.

18. Terminal de télécommunications (612) selon la revendication 16 ou la revendication 17 et qui est un terminal de communications fixe ou mobile.

19. Terminal de télécommunications (612) selon la revendication 18 et qui fonctionne selon des protocoles de la norme TETRA.

20. Procédé pour l'utilisation dans un premier terminal de communication (612) pour produire une séquence de clé de chiffrement afin de chiffrer des informations à communiquer du premier terminal de communication à un second terminal de communication, le procédé comprenant : un générateur de séquence de clé (403) générant une séquence de clé ; et un diviseur (407) divisant la séquence de clé en blocs, chacun des blocs (507) incluant : (i) une partie de chiffrement (509) pour l'utilisation dans la combinaison dans un combineur (410, 510) du premier terminal avec une partie respective des informations (402) à communiquer afin de chiffrer la partie respective des informations ; et (ii) une partie de synchronisation (518) pour l'utilisation dans le générateur de séquence de clé afin de générer un bloc de séquence de clé de chiffrement suivant par la combinaison avec une clé secrète ; **caractérisé par** : le diviseur (407) divisant chacun des blocs de séquence de clé (507) en une pluralité de sous-blocs de taille égale, chacun des sous-blocs comprenant une partie respective d'une pluralité de parties de chiffrement distinctes (509, 514), chacune pour l'utilisation dans la combinaison dans le combineur avec une partie respective des informations à communiquer afin de chiffrer la partie respective des informations ; et un des sous-blocs comprenant la seule partie de synchronisation (518).

21. Procédé de communication d'informations d'un premier terminal de communication (701) à un second terminal de communication (702), le procédé incluant le chiffrement des informations en combinant les informations avec les parties de chiffrement de la séquence de clé produite par le procédé selon la revendication 20 pour la transmission depuis le premier terminal, la réception des informations chiffrées au niveau du second terminal et le déchiffrement des informations reçues au niveau du second terminal.
